# EUROPÄISCHE PATENTSCHRIFT

(11) **EP 2 407 842 B1**
(45) Veröffentlichungstag und Bekanntmachung des Hinweises auf die Patenterteilung: **17.03.2021**
(21) Anmeldenummer: 10191536.1
(22) Anmeldetag: 17.11.2010
(51) Int. Cl.: G05B 19/042

(54) **Verfahren zur Inbetriebnahme von Maschinen oder Maschinen einer Maschinenserie und Projektierungssystem**
Method for operating machines or machines in a machine series and design system
Procédé de mise en service de machines ou machines d'une série de machines et système de planification

(30) Priorität: 16.07.2010 DE 102010027289
(43) Veröffentlichungstag der Anmeldung: 18.01.2012
(73) Patentinhaber: Siemens Aktiengesellschaft, 80333 München (DE)
(72) Erfinder: Keller, Jochen, 09125, Chemnitz (DE); Illner, Sven, 08209, Auerbach (DE); Müller, Lutz, 09337, Bernsdorf (DE); Tanneberger, Lars, 09439, Amtsberg (DE)

(56) Entgegenhaltungen:
- EP-A2- 1 422 619
- EP-A2- 1 710 647
- DE-A1-102007 060 990
- US-A1- 2007 165 031

## Beschreibung

Die Erfindung betrifft ein Verfahren zur Inbetriebnahme, Aktualisierung oder Konfiguration/Parametrierung - im Folgenden zusammen als Inbetriebnahme bezeichnet - von Maschinen oder Maschinen einer Maschinenserie sowie ein nach dem Verfahren arbeitendes Projektierungssystem sowie ein Projektierungssystem, das ein nach dem Verfahren arbeitendes Softwarepaket generiert.

Zur Erstellung von Steuerungsprogrammen für eine Maschine und damit zur Erstellung von Software, auf die sich eine Inbetriebnahme beziehen kann, sind verschiedene Ansätze, die den Erstellungsprozess automatisieren sollen, im Stand der Technik bekannt. Die EP 1 422 619 A beschreibt zum Beispiel einen Ansatz, der auf der Verwendung wieder verwendbarer Templates basiert, wobei einzelne Temple jetzt Platzhalter aufweisen,, die beim Erstellen des Steuerungsprogramms bearbeitet werden. Die DE 10 2007 060 990 A betrifft ein Verfahren zur automatischen Erstellung eines Installationspaket, bei dem zur Vermeidung Geschlecht handhabbarer Größen solcher Installationspakete vorgesehen ist, dass anhand einer Installationsbeschreibungsdatei jeweils benötigte Geräteobjekte konkret ausgewählt werden und sodann anhand dieser Auswahl ein Installationspaket mit genau den benötigten Geräteobjekten erstellt wird.

Jede von einem Hersteller von Maschinen aus der Automatisierungstechnik angebotene, modulare Maschine, z.B. eine Werkzeugmaschine, kann normalerweise mit unterschiedlichen Elementen, wie z.B. verschiedenen Werkzeugwechslern, verschiedenen Maschinenachsen und verschiedenen Motorspindeln, die z.B. über unterschiedliche Umdrehungsgeschwindigkeiten verfügen, bestückt werden. Alle diese Ausstattungsmöglichkeiten definieren eine Maschinenserie.

EP 1 422 619 A2 offenbart ein Verfahren zur Erstellung eines auf einer Industriesteuerung ausführbares Programm zur Steuerung eines industriellen Prozesses, wobei in einem Projektierungssystem anhand eines Hierarchischen Baums ein Programm generiert wird, welches zur Steuerung des industriellen Prozesses dient.

DE 10 2007 060990 A1 offenbart ein Verfahren zum Erzeugen eines Installationspakets von über das Internet bereitgestellten Geräteobjekten und zum Integrieren des Installationspakets in ein Konfigurationssystem zum Bedienen oder Überwachen von Feldgeräten der Automatisierungstechnik.

US 2007/165031 A1 offenbart ein Verfahren zur Verwendung in einer Prozessumgebung zur Darstellung und Bearbeitung von Informationen über die Prozessumgebung wie beispielsweise den aktuellen Zustand von Vorrichtungen in einer Prozessanlage.

In der EP 2202316 B1 wird eine Steuerung mit integriertem Maschinenmodell beschrieben. Dabei sind alle Informationen und relevanten Daten der Maschinenserie auf der Steuerung hinterlegt und vom Bediener abrufbar. Dies umfasst unter anderem Anleitungen zur Änderung des Sollausbaus, eine Liste vorhandener Schnittstellen, der Inbetriebsetzungsinformationen sowie Informationen zur Parametrisierung vorhandener Elemente der Maschine. Anhand dieser Information muss der Bediener die Maschine manuell konfigurieren. Bei diesem Ansatz wird die Maschinenevolution im Logbuch der Maschine dokumentiert. Dieses ist auf der Steuerungseinrichtung der Maschine gespeichert.

Eine Aufgabe der Erfindung besteht darin, ein Verfahren und als Vorrichtung ein nach dem Verfahren arbeitendes System anzugeben, das eine Inbetriebnahme oder eine Aktualisierung von Maschinen oder Maschinen einer Maschinenserie erleichtert, insbesondere, schneller und sicherer gestaltet. Als Inbetriebnahme im Sinne der obigen Definition wird dabei auch eine Serieninbetriebnahme und Serienaktualisierung sowie eine Serienwiederinbetriebnahme, also eine sich gleichzeitig oder nacheinander auf mehrere Maschinen beziehende Inbetriebnahme oder Wiederinbetriebnahme bzw. Aktualisierung, verstanden. Im Folgenden wird anstelle der Formulierung Maschinen oder Maschinen einer Maschinenserie kurz mitunter auch nur der Begriff Maschine verwendet.

Bezüglich des Verfahrens wird diese Aufgabe gelöst durch die Merkmale des Anspruchs 1. Zweckmäßige Weiterbildungen dieses Verfahrens sind Gegenstand der auf diesen rückbezogenen Unteransprüche. Dabei wird in einem Verfahren zur Inbetriebnahme von Maschinen ein ausführbares Softwarepaket erstellt, das die Inbetriebnahmedaten einer bestimmten Maschine oder der Maschinen der Maschinenserie enthält. Zur Ausführung des Softwarepakets kommt dabei die jeweils zur Inbetriebnahme vorgesehene Maschine oder bei mehreren Maschinen jede dieser Maschinen oder eine dieser Maschinen in Betracht. Wenn das Softwarepaket direkt auf der Maschine zur Ausführung gelangt, geschieht dies mittels einer von der Maschine umfassten Steuerungseinrichtung, die beim Betrieb der Maschine auch die von der Maschine ausgeführten Abläufe steuert und überwacht. Alternativ oder zusätzlich, insbesondere in Abhängigkeit von der Ausprägung der Steuerungseinrichtung und den örtlichen Voraussetzungen, kann auch vorgesehen sein, dass die Ausführung des Softwarepakets auf einer mit der jeweiligen Maschine oder den jeweiligen Maschinen kommunikativ verbundenen oder verbindbaren Einheit erfolgt, also z.B. einem Programmiergerät oder einem lokalen oder auch einem entfernten Server.

Die Erstellung des Softwarepakets erfolgt dabei automatisch in einem Projektierungssystem und zwar anhand eines in Form eines Graphen, insbesondere eines gewurzelten Baumes, mit Kanten und Knoten hierarchisch strukturierten, insbesondere monohierarchisch strukturierten Schrittbaums.

In dem Schrittbaum umfassen zumindest einzelne Knoten Daten und/oder Informationen zur Inbetriebnahme einer Maschine oder eine Bezugnahme auf solche Daten oder Informationen. Ein Datum ist dabei z.B. ein Konfigurationsparameter, also z.B. ein Verstärkungsfaktor eines Regelkreises, entweder als tatsächlicher Zahlenwert oder als Eingabemöglichkeit für einen solchen Zahlenwert. Als Information kann ein Knoten z.B. Erläuterungen, z.B. in textueller Form, umfassen oder referenzieren. Im Folgenden wird anstelle der Formulierung Daten und/ oder Information(en) mitunter auch nur kurz der Begriff Daten verwendet.

Des Weiteren beschreiben in dem Schrittbaum die Kanten zugelassene Übergänge zwischen jeweils zwei Knoten. Ein Graph ist bekanntlich ein abstrakter Datentyp und der Schrittbaum ist eine Ausführungsform eines solchen Datentyps. Unter Verwendung des Projektierungssystems wird der Schrittbaum angelegt und mit Daten befüllt oder es werden Daten zugeordnet. Nach Abschluss einer derartigen Datenvorbereitung wird durch das Projektierungssystem automatisch das Softwarepaket erstellt. Das resultierende Softwarepaket umfasst den Schrittbaum oder eine Entsprechung des Schrittbaums.

Bezüglich des Systems wird die Aufgabe durch die Merkmale des nebengeordneten Vorrichtungsanspruchs gelöst. Zweckmäßige Weiterbildungen des Systems sind Gegenstand weiterer Unteransprüche oder ergeben sich aus einer Umsetzung einzelner oder mehrerer Merkmale des Anspruchs 1 und der darauf rückbezogenen Ansprüche.

Der Schrittbaum ermöglicht aufgrund des zugrunde liegenden Graphen, insbesondere in einer Ausprägung als Baum, eine strukturierte Abbildung der Maschine. Der Schrittbaum umfasst in hierarchisch strukturierter Anordnung diejenigen Daten und/oder Informationen, die für eine Inbetriebnahme einer Maschine oder einer Mehrzahl von Maschinen benötigt werden.

In einem Produktdatenmanagementsystem (PDM-System) sind Daten zu einzelnen Elementen, Komponenten, Steuerungsobjekten, usw. - hier und im Folgenden zusammen als Elemente bezeichnet - einer Maschine oder Maschinenserie gespeichert. Ein solches Produktdatenmanagementsystem, aber auch jede andere Datensammlung, die Daten einer Maschine oder mehrerer Maschinen und jeweils zugehöriger oder mit der Maschine/den Maschinen verwendbarer Elemente umfasst, kann als Datenbasis für die Erstellung des Schrittbaums hergenommen werden.

Die Darstellung im Produktdatenmanagementsystem kann dabei in einer nach Klassifizierungsrichtlinien gegliederten Art und Weise erfolgen, die sich nicht am funktionellen Zusammenwirken orientiert, sondern beispielsweise eher an Kriterien wie Lagerhaltung, Lieferantenzuordnung oder Dimensionierung einer Maschinenachse, Leistungsdaten von Servomotoren der Maschine, Drehzahlen und Ausbaustufen von Motorspindeln, Kapazität von Werkzeugmagazinen, Ausgestaltung der Werkzeugwechseleinrichtungen, Typen von Messwertgebern oder auch Systemsoftwareständen usw. orientiert. Eine solche Gliederung kann z.B. alle oder einige Daten einer Maschinenachse zusammenfassen.

Das Softwarepaket soll als Inbetriebnahmewerkzeug eine Vorgabe oder Konfiguration aller für die Maschine relevanten Parameter ermöglichen. Wenig sinnvoll ist dabei, wenn anhand der Daten aus der jeweiligen Datenbasis und der dort vorgesehenen Gliederung ein Inbetriebnahmewerkzeug entsteht, das sämtliche erfassten Daten einer Parametrierung zugänglich macht. Das Produktdatenmanagementsystem als Datenbasis umfasst nämlich auch Daten zu optionalen Elementen, die an der jeweils zur Inbetriebnahme vorgesehenen Maschine evtl. gar nicht vorhanden sind. Andererseits ist allgemein akzeptiert, dass es sinnvoll ist, den gesamten Datensatz einer Maschinenserie zusammengefasst zu verwalten. Da es in der Praxis häufig vorkommt, dass sich die Ausbaustufe einer Maschine einer Maschinenserie kurzfristig noch ändert, ist es vorteilhaft, wenn die dabei benötigten Daten verfügbar sind.

Die Erfindung und Ausgestaltungen derselben befassen sich also mit widerstreitenden Forderungen, nämlich zum einen einer jederzeitigen, grundsätzlichen Verfügbarkeit sämtlicher Daten und zum anderen der Notwendigkeit einer Strukturierung dieser Daten, derart, dass genau die oder nur die Daten, und zwar nur in der notwendigen Kombinatorik, die für eine Inbetriebnahme einer jeweiligen Maschine benötigt werden, einer Parametrierung zugänglich sind. Dies leistet der Schrittbaum. Der Schrittbaum ermöglicht aufgrund seiner Struktur eine hierarchische Ordnung von umfassten oder referenzierten Daten. Die Daten sind dabei jeweils einem Knoten des zugrunde liegenden Graphen zugeordnet. Ein Knoten kann dementsprechend auch als Inbetriebnahmeschritt aufgefasst werden und die Begriffe Knoten und Inbetriebnahmeschritt werden entsprechend im Folgenden synonym verwendet. Aufgrund wohldefinierter Übergänge zwischen einzelnen Knoten/Inbetriebnahmeschritten, nämlich aufgrund von Kanten, die jeweils zwei Knoten verbinden, ist ein Traversieren, also Durchschreiten oder Abarbeiten, des Schrittbaums möglich. Beim Abarbeiten des Schrittbaums werden entsprechend der dabei erreichten Inbetriebnahmeschritte Daten eingegeben oder Referenzen zu in Bezug genommenen Daten aufgelöst usw. und an die Maschine oder mehrere Maschinen übertragen. Die Übertragung erfolgt dabei üblicherweise in die Steuerungseinrichtung der Maschine(n) und dort zur Konfiguration, Parametrierung, usw. vorgesehene Speicherstellen, die beim Betrieb der Maschine in an sich bekannter Art und Weise ausgelesen werden um einen bestimmungsgemäßen Betrieb zu gewährleisten.

Bei der Erstellung des Schrittbaums werden zum einen dessen Struktur festgelegt und zum anderen mit den einzelnen Knoten/Inbetriebnahmeschritten entsprechend der jeweiligen Position in der Struktur mit Daten verknüpft. Eine beliebige Anzahl von Inbetriebnahmeschritten - im Folgenden kurz mitunter auch nur als Schritt bezeichnet - in einer Ebene unterhalb eines Knotens, also unterhalb eines anderen Inbetriebnahmeschritts, bilden eine Gruppe. Jeder Schritt kann wieder einen Knoten für eine neue Gruppe bilden.

Wenn der Schrittbaum zur sequentiellen Abarbeitung, also zur entsprechend der Struktur des Schrittbaums aufeinander folgenden Abarbeitung der von dem Schrittbaum umfassten Schritte, eingerichtet ist, kann jedes Datum oder jede Information einzeln für die Inbetriebnahme der jeweiligen Maschine oder Maschinenserie abgefragt werden, wobei die Abfrage aufgrund der Struktur des Schrittbaums in einer technologisch sinnvollen Reihenfolge erfolgt.

Wenn die Ausführung von Schritten und/oder der Übergang von einem Schritt zu einem anderen Schritt derart ausgebildet sind, dass die Ausführung des Schrittes vom Ergebniswert einer logischen Bedingung abhängt, ergibt sich eine Möglichkeit zur dynamischen Abarbeitung des Schrittbaums, wobei die Abarbeitung dadurch dynamisch wird, dass auf definierte Bedingungen z.B. anhand von tatsächlichen Verhältnissen reagiert wird. Ein einfaches Beispiel für eine solche dynamische Abarbeitung ist die Überprüfung, ob die jeweilige Maschine eine bestimmte Konfiguration aufweist, z.B. neben einer ersten und zweiten Achse auch eine dritte Achse. Bei der Abarbeitung des Schrittbaums wird ein Übergang der zu einem Schritt oder einer Gruppe von Schritten verzweigt, der oder die Daten für eine dritte Achse umfasst bzw. umfassen, damit nur dann ausgeführt, wenn tatsächlich eine solche dritte Achse an der Maschine vorhanden ist. Zur Überprüfung der jeweiligen Konfiguration der Maschine kann z.B. auf einen in der Maschine gespeicherten Konfigurationsdatensatz zurückgegriffen werden oder es erfolgt eine Ermittlung der Maschinenkonfiguration durch einen von der Grundfunktionalität der Maschine normalerweise umfassten Selbsttest, bei dem alle angeschlossenen Funktionseinheiten ihre Zugehörigkeit zur Maschine und normalerweise weitere Daten, wie z.B. Spindelgröße oder dergleichen, an eine zentrale Einheit der Maschine melden.

Wenn innerhalb des Schrittbaums einzelne Schritte oder Gruppen von Schritten aktivierbar oder deaktivierbar sind und nur aktivierte Schritte abgearbeitet werden, kann z.B. bereits während der Projektierung des Schrittbaums, der später direkt oder indirekt in das als Inbetriebnahmewerkzeug fungierende Softwarepaket einfließt, eine Aktivierung bestimmter Schritte und damit deren grundsätzliche Ausführbarkeit vorgegeben werden. Andererseits kann bereits während der Projektierung die Ausführbarkeit anderer Schritte durch entsprechende Deaktivierung verhindert werden. Eine Deaktivierung eines Schrittes kommt z.B. für eine Kante/einen Übergang in Betracht, die bzw. der zur Konfiguration einer dritten Maschinenachse verzweigt, wenn feststeht, dass die Maschine oder die Maschinen, für die das projektierte Softwarewerkzeug bestimmt ist, keine dritte Maschinenachse umfasst bzw. umfassen. Andere Schritte, bei denen eine unbedingte Aktivierung sinnvoll sein kann, sind z.B. solche Schritte, die zu einer Konfiguration einer Anbindung der Maschine/Maschinen an eine übergeordnete Einheit, verzweigen. Eine unbedingte Aktivierung/Deaktivierung kann auch sinnvoll sein, wenn eine subjektive Entscheidung an der Maschine durch den Bediener getroffen werden soll, ob z.B. NC-Zyklen oder Teileprogramme nachinstalliert werden oder nicht. Des Weiteren kann eine unbedingte Aktivierung einzelner Schritte sinnvoll sein, wenn es keine Möglichkeit gibt, die Ausführung des jeweiligen Schrittes von einer Bedingung abhängig zu machen, beispielsweise weil keine bei der Maschine auslesbaren Daten zur Verfügung stehen, um die Bedingung zu formulieren.

Wenn mindestens ein Schritt des Schrittbaums mit mindestens einem Skript verknüpft ist und das Skript mindestens eine Anweisung und/oder Daten enthält, kann beim Abarbeiten des Schrittbaums automatisch die Ausführung solcher Skripte erfolgen. Mit solchen Skripten und der mindestens einen davon umfassten Anweisung ergeben sich zusätzliche Möglichkeiten zur Benutzerführung während der Ausführung des zur Inbetriebnahme der Maschine/Maschinen generierten Softwarepakets.

In einem Skript können beispielsweise die Antriebs- oder NC-Parameter für einen Antrieb oder eine Achse enthalten sein, die in die Steuerungseinrichtung geladen werden. Ein Skript eignet sich hier besonders, wenn für die Ermittlung der tatsächlichen Antriebsparameter arithmetische oder logische Operationen ausgeführt werden müssen. Solche Operation können in einem Skript kodiert werden. Die oder jede Operation wird im Rahmen der Ausführung des Skripts ausgeführt und es ergibt sich ein an die Steuerungseinrichtung übertragbarer Wert, z.B. ein Zahlenwert. Des Weiteren kann ein Skript z.B. eine Obergrenze für einen bestimmten Eingabewert festlegen und alle Eingaben über dieser Obergrenze zurückweisen, so dass Parametrierungen aufgrund von Eingaben, die bestimmte in einem Skript kodierte Bedingungen nicht erfüllen, nicht möglich sind.

Wenn das Skript oder ein oder mehrere Skripte mindestens eine Referenz auf in einem externen System, insbesondere einem Produktdatenmanagementsystem, gespeicherte Inbetriebnahmedaten der Maschine oder Maschinenserie enthalten, kann aufgrund der Anweisungen in dem Skript automatisch eine Übernahme der Daten aus dem externen System in die Maschine oder in eine zur Aufnahme von die Konfiguration der Maschine betreffende Daten vorgesehene Einheit erfolgen.

Als mit dem hier vorgestellten Ansatz und ggf. seinen Ausgestaltungen konfigurierbare Maschinen kommen Maschinen aus der Automatisierungstechnik, insbesondere Werkzeugmaschinen, in Betracht.

Zur Umsetzung des hier vorgestellten Ansatzes und ggf. seiner Ausgestaltungen kommt ein Projektierungssystem in Betracht, das dazu vorgesehen ist, anhand eines zuvor erstellten Schrittbaums ein auf einer Maschine oder einer Maschinen einer Maschinenserie ausführbares Softwarepaket zu erstellen, wobei das Softwarepaket die Inbetriebnahmedaten der jeweiligen Maschine bzw. Maschinenserie oder Bezugnahmen auf solche Daten umfasst, z.B. in Form von Referenzierungen, insbesondere Referenzierung von Daten des PDM-Systems. Das Projektierungssystem wird bei der Projektierung des für die eigentliche Inbetriebnahme vorgesehenen Softwarepakets verwendet. Das Projektierungssystem ermöglicht einem Projektant die strukturierte Zusammenfassung der für die Inbetriebnahme notwendigen Daten und Informationen und eine Zuweisung der sich daraus ergebenden Struktur an einzelne Schritte des Schrittbaums in einer für die Daten und Informationen notwendigen oder sinnvollen Reihenfolge. Mit dem Projektierungssystem nimmt der Projektant z.B. auch eine Aktivierung oder Deaktivierung einzelner Schritte des Schrittbaums usw. vor. Eine solche Projektierung erlaubt eine zentrale Erstellung des für die Inbetriebnahme der Maschine/Maschinen vorgesehenen Softwarepakets. Bei einer zentralen Erstellung des Softwarepakets als Inbetriebnahmewerkzeug bestehen die Möglichkeiten zur praktischen Handhabung darin, dass z.B. ein Softwarepaket für eine Mehrzahl von Maschinen generiert wird und die Aktivierung/ Deaktivierung der Schritte für jede Maschine in einer Konfigurationsdatei hinterlegt wird, die bei der Abarbeitung eines Paketes ausgewertet wird oder dass für jede Maschine ein Softwarepaket generiert wird, das eine für jede Maschine spezielle Aktivierung/Deaktivierung der Schritte beinhaltet. Die oben erwähnte Konfigurationsdatei kann dabei Bestandteil des Softwarepakets sein.

Die Erstellung des Softwarepakets kann beispielsweise durch den Maschinenhersteller erfolgen, der aufgrund der umfassenden Kenntnis über den Funktionsumfang der eigenen Maschinen in der besten Position ist, eine Strukturierung der Daten/Informationen vorzunehmen. Das Ergebnis der Projektierung ist zunächst der Schrittbaum und sodann ein auf dessen Basis automatisch erzeugtes Softwarepaket, das dem Benutzer einer Maschine für deren Inbetriebnahme zur Verfügung gestellt werden kann. Der mit der Inbetriebnahme vor Ort betraute Anwender benötigt keine Detailkenntnisse, wie sie der Maschinenhersteller hat, und kann sich bei der Ausführung des Softwarepakets durch die dabei erfolgende Abarbeitung des Schrittbaums sukzessive zu allen für die Inbetriebnahme/Konfiguration relevanten Daten und Informationen leiten lassen und, soweit dies der Projektant bei der Erstellung des Schrittbaums vorgesehen hat, entsprechende Eingaben, Änderungen, usw. vornehmen.

Der hier vorgestellte Ansatz und ggf. einzelne oder mehrere Ausgestaltungen davon werden also sowohl durch das Projektierungssystem als auch durch das mit dem Projektierungssystem generierte Softwarepaket umgesetzt. Mit dem Projektierungssystem wird der Schrittbaum aufgebaut, indem dessen Struktur festgelegt wird und einzelnen davon umfassten und Inbetriebnahmeschritte repräsentierenden Knoten entsprechend ihrer Position im Schrittbaum Daten und Informationen für die Inbetriebnahme zugewiesen werden. Das Softwarepaket ermöglicht die automatisierte Abarbeitung des so generierten Schrittbaums bei der Inbetriebnahme einer oder mehrerer Maschinen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: schematisch vereinfacht ein Produktdatenmanagementsystem, ein Projektierungssystem, ein mit dem Projektierungssystem generierbares Softwarepaket und mehrere Maschinen, für die das Softwarepaket für deren Inbetriebnahme bestimmt ist,
- FIG 2: das Projektierungssystem und einen vom Produktdatenmanagementsystem bereitgestellten Datensatz mit weiteren Details, insbesondere einem Schrittbaum,
- FIG 3: eine funktionelle Darstellung eines Schrittbaums,
- FIG 4: eine zu der Darstellung in FIG 1 alternative Ausführungsform und
- FIG 5: eine Maschine mit einem geladenen Softwarepaket und Mitteln zu dessen Ausführung.

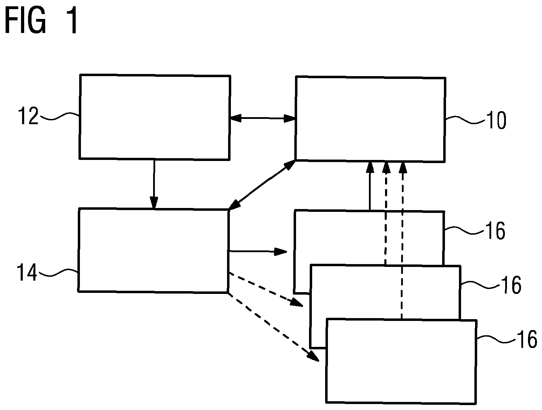

FIG 1 zeigt schematisch vereinfacht ein Produktdatenmanagementsystem 10 (PDM-System), ein Projektierungssystem 12, ein mit dem Projektierungssystem 12 generierbares oder generiertes Softwarepaket 14 und mehrere Maschinen 16, wobei das Softwarepaket 14 zur Inbetriebnahme einer Maschine 16 oder einer Maschine 16 einer Maschinenserie, insbesondere mehrerer Maschinen 16 der gleichen Maschinenserie, vorgesehen ist.

Die zwischen den die vorgenannten Einheiten repräsentierenden Blöcken verlaufenden Pfeile verdeutlichen einen Datenfluss: das Projektierungssystem 12 importiert Daten aus dem Produktdatenmanagementsystem 10 und/oder referenziert Daten in dem Produktdatenmanagementsystem 10; das Projektierungssystem 12 generiert das Softwarepaket 14 und dabei fließen Daten aus dem Projektierungssystem 12 in das Softwarepaket 14 ein; das Softwarepaket 14 kann Daten in dem Produktdatenmanagementsystem 10 referenzieren oder es könnten Daten aus dem Produktdatenmanagementsystem 10 in das Softwarepaket aufgenommen sein; das Softwarepaket 14 wird schließlich an einer Maschine 16 oder mehreren Maschinen 16 für deren Inbetriebnahme oder Konfiguration verwendet; dabei kann ein Zugriff auf das Produktdatenmanagementsystem 10 stattfinden, z.B. indem Daten über das Ergebnis der Inbetriebnahme im Produktdatenmanagementsystem 10 abgelegt werden.

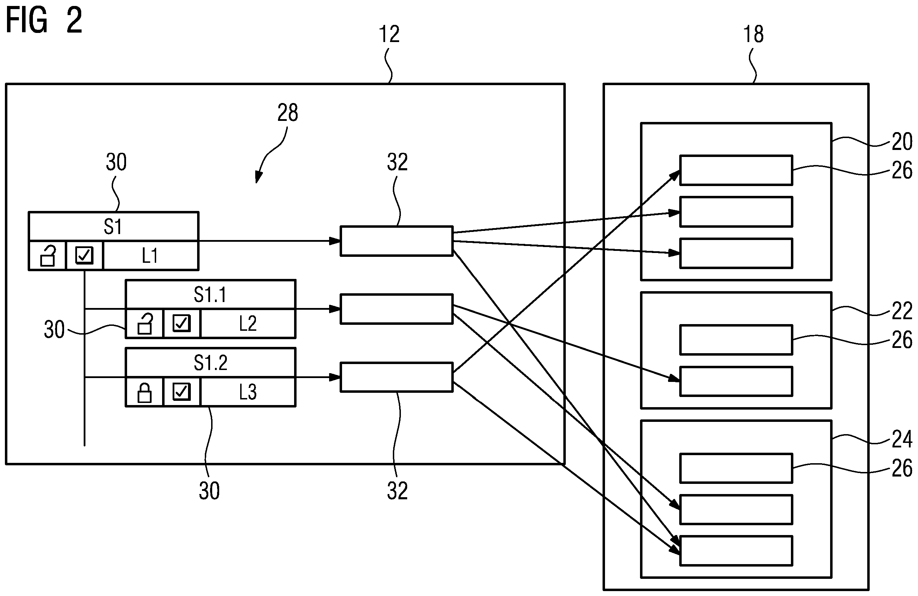

FIG 2 zeigt, dass in einem von einem Produktdatenmanagementsystem 10 (FIG 1) bereitgestellten Datensatz 18 Daten, d.h. Inbetriebnahmedaten, zu einzelnen Elementen einer Maschine 16, z.B. einer Werkzeugmaschine, gespeichert sind. Die Darstellung der Daten in dem Produktdatenmanagementsystem 10 erfolgt dabei üblicherweise in einer gegliederten Struktur, wie eingangs erwähnt. Die Daten können stark vereinfacht dargestellt beispielsweise wie folgt abgelegt sein:
Achse x
   NC-Daten x
   Antriebsdaten x
   Geberdaten x
   Motordaten x
Achse y
   NC-Daten y
   usw.

Alternativ kommt grundsätzlich auch folgende Struktur in Betracht:
NC-Daten
   NC-Daten x
   NC-Daten y
   NC-Daten z
Antriebsdaten
   Antriebsdaten x
   Antriebsdaten y
   Antriebsdaten z
Geberdaten
   Geberdaten x
   usw.
usw.

Dargestellt sind für den Datensatz 18 exemplarisch drei Datengruppen, also eine erste, zweite und dritte Datengruppe 20, 22, 24, von denen jede jeweils mindestens ein Datum 26, z.B. ein Datum wie oben erwähnt, umfasst. Bei der ersten Datengruppe 20 kann es sich demnach z.B. um NC-Daten handeln, z.B. um Verstärkungsfaktoren der Regler der Maschine. Die Datengruppe 20 umfasst also mindestens ein einen Verstärkungsfaktor repräsentierendes Datum 26. Bei der zweiten Datengruppe 22 kann es sich z.B. um Geberdaten handeln, die z.B. die Auflösungen der Geber der Maschine angeben. Die Datengruppe 22 umfasst also als Datum 26 mindestens ein Geberdatum. Bei der dritten Datengruppe 24 kann es sich z.B. um Antriebsdaten handeln, die z.B. Motortypen und Leistungen der Motoren der Maschine angeben. Die Datengruppe 24 umfasst also mindestens ein Motordaten repräsentierendes Datum 26.

Aus der Vielzahl von Elementen und Modulen, mit denen modulare Maschinen ausgestattet werden können, ergibt sich schnell eine unüberschaubare Anzahl von möglichen Kombinationen und Permutationen (hier als Kombinatorik bezeichnet), von denen allerdings im Allgemeinen die meisten technisch nicht sinnvoll sind, z. B. eine Kombination von Motoren mit einem hohen Drehmoment mit einem nur für niedrige Drehmomente ausgelegten Leistungsteil. Es ist somit nicht trivial, diejenigen Kombinationen, die technisch sinnvoll sind, zu kennzeichnen und in strukturierter Form einfach auswählbar zu machen.

Da es in der Praxis häufig vorkommt, dass sich die Ausbaustufe einer Maschine oder einer Maschinenserie kurzfristig noch ändert, ist es vorteilhaft, wenn die insoweit zusätzlich benötigten Daten verfügbar sind, so dass es sinnvoll ist, den gesamten Datensatz 18 einer Maschine oder Maschinenserie in einem Paket zu verwalten.

FIG 2 zeigt dazu innerhalb des Projektierungssystems 12 eine graphische Darstellung eines Schrittbaums 28. Mit Hilfe des Schrittbaums 28 sind aus dem jeweiligen Datensatz 18 einer Maschine oder Maschinenserie, z.B. also durch Zugriff auf das Produktdatenmanagementsystem 10 (FIG 1), die zur tatsächlichen Ausprägung der Maschine/Maschinenserie passenden Kombinationen von Daten leicht auf einfache unverwechselbare Art und Weise zusammenstellbar. Der Schrittbaum 28 ermöglicht eine Zusammenfassung nur derjenigen Daten aber auch genau derjenigen Daten, die angesichts der Ausprägung der Maschine in Frage kommen.

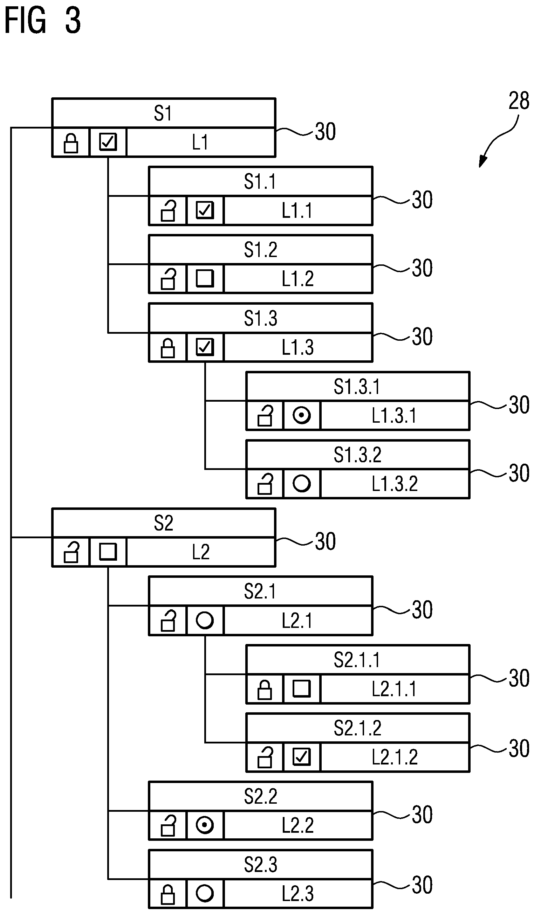

Hierzu werden mittels des Projektierungssystems 12 Elemente, und sonstige Funktionseinheiten der Maschine(n) und der als Maschinensteuerung fungierenden Steuerungseinrichtung, im Folgenden als Maschinen- und Steuerungsobjekte bezeichnet, in dem Schrittbaum 28 abgebildet. Dem Schrittbaum 28 liegt ein Graph zugrunde und als solcher umfasst er eine Mehrzahl von Knoten, die durch Kanten verbunden sind. Die Knoten des Schrittbaums werden als Schritte 30 und die zwischen einzelnen Schritten 30 bestehenden Kanten oder Verbindungen als Übergänge bezeichnet. Eine beliebige Anzahl von Schritten 30 in jeweils einer Ebene des Schrittbaums 28 unterhalb eines Knotens bilden eine Gruppe (siehe FIG 2, FIG 3). Jeder Schritt 30 kann wieder einen Knoten für eine neue Gruppe bilden. Jeder Schritt 30 kann mit einem oder mehreren Skripten 32 (FIG 2) verknüpft sein. Solche Skripte 32 enthalten schrittbezogene Daten und Anweisungen. Mindestens ein Schritt 30 muss mit einem Skript 32 verknüpft sein.

Die Abbildung der Maschine 16 oder Maschinenserie in Form eines Schrittbaums 28 wählt aus der Vielzahl der grundsätzlich möglichen Kombinationen aller von einem Datensatz 18 umfassten Daten zunächst genau eine Kombination dieser Daten aus, also z.B. eine Konfigurierbarkeit eines Antriebs für eine dritte Motorachse nur dann, wenn die jeweilige Maschine eine Verwendung einer dritten Motorachse erlaubt. Sodann wird mit dem Schrittbaum 28 mit dessen baumartiger Struktur auch eine hierarchische Organisation der Daten vorgenommen, derart, dass bei Ausführung eines Softwarepakets 14 (FIG 1), das anhand des Schrittbaums 28 generiert wird, die Parametrierung der jeweiligen Maschine für deren Inbetriebnahme in einer sinnvollen oder technisch notwendigen Reihenfolge erfolgt. Dabei bilden zumindest einzelne Knoten des Schrittbaums 28 jeweils einen Inbetriebnahmeschritt (Schritt 30), wobei einzelne andere Knoten evtl. nur für Gruppierungs- oder Strukturierungszwecke vorgesehen sein können, und beim Abarbeiten des Schrittbaums 28 entsprechend dessen hierarchischer Struktur werden sukzessive einzelne Inbetriebnahmeschritte 30 in einer technisch sinnvollen oder notwendigen Reihenfolge erreicht. Die dafür notwendige Struktur erhält der Schrittbaum 28 indem die umfassten einzelnen Schritte 30 oder die zugrundeliegenden Knoten durch Kanten (Übergänge) verbunden werden und ein bestimmter Schritt 30 kann ausgehend von einem anderen Schritt nur erreicht werden, wenn mittelbar oder unmittelbar zwischen beiden Schritten 30 ein Übergang vorgesehen ist. Mögliche Übergänge werden durch den Projektanten bei der Erstellung des Schrittbaums 28 festgelegt.

In FIG 2 sind mehrere derartige Übergänge dargestellt, z.B. der Übergang zwischen dem Schritt 30 mit dem symbolischen Bezeichner "S1" und dem Schritt 30 mit dem symbolischen Bezeichner "S1.1". Der Schritt 30 mit dem symbolischen Bezeichner "S1.1" kann folglich nur erreicht werden, wenn bereits vorher der Schritt 30 mit dem symbolischen Bezeichner "S1" erreicht wurde, wenn also in einer konkreten Inbetriebnahmesituation der Inbetriebnahmeschritt 30 mit dem symbolischen Bezeichner "S1" bereits ausgeführt wurde. Die beiden genannten Inbetriebnahmeschritte 30 können damit in einer logischen oder technologischen Beziehung stehen, derart, dass z.B. die Ausführung des Inbetriebnahmeschritt 30 mit dem symbolischen Bezeichner "S1.1" nur dann oder gerade dann sinnvoll ist, wenn bereits der Inbetriebnahmeschritt 30 mit dem symbolischen Bezeichner "S1" ausgeführt wurde.

In FIG 2 sind alle dargestellten Schritte 30 symbolisch mit S1, S1.1, S1.2 bezeichnet. Ein Schritt kann aktiviert und damit zur Abarbeitung zugelassen sein. In FIG 2 ist dies durch ein markiertes Kästchen dargestellt. Eine solche Aktivierung oder ggf. auch Deaktivierung wird normalerweise bei der Projektierung festgelegt und kann bei der Ausführung des dabei generierten Softwarepakets 14 (FIG 1), also im Zuge der Inbetriebnahme, ggf. noch geändert werden, wenn eine solche Änderung zugelassen ist, wenn also z.B. die Anpassung des Softwarepakets 14 an die jeweilige Ausprägung der Maschine bei dessen Abarbeitung an der Maschine durch den Bediener vorgenommen werden soll. Eine durch die Struktur des Schrittbaums 28 an sich vorgegebene Abfolge von Inbetriebnahmeschritten 30 kann auf diese Weise beeinflusst werden.

In FIG 2 ist die Möglichkeit der Änderung der Aktivierung/ Deaktivierung durch ein Schloss symbolisiert, wobei das gezeigte offene Schloss eine Möglichkeit zur Änderung der bei der Projektierung festgelegten Aktivierung oder Deaktivierung anzeigt.

Eine zusätzliche oder alternative Möglichkeit, die Abarbeitung einzelner oder mehrerer Schritte zu beeinflussen, besteht darin, dass die Ausführung oder die Ausführbarkeit eines Schritts 30 vom Ergebniswert einer logischen Bedingung abhängt. In der Darstellung in FIG 2 sind solche logischen Bedingungen schematisch vereinfacht als weitere Eigenschaften dargestellt und symbolisch jeweils mit L1, L2, L3 bezeichnet. Bei der Formulierung der jeweiligen logischen Bedingung können Variable, Maschinendaten, auslesbare Hardwarekonfigurationen, auslesbare Softwareversionen, auslesbare Systemvariable usw. verwendet und geeignet verknüpft werden.

Der Schrittbaum 28 wird bei der Ausführung, also bei der Ausführung des auf dem Schrittbaum 28 basierenden Softwarepakets 14 (FIG 1), in einer durch die zwischen Inbetriebnahmeschritten bestehenden Übergängen festgelegten Reihenfolge, also sequentiell, abgearbeitet. Durch eine bedingte Abarbeitung einzelner Schritte 30 und deren Skripte 32, entweder durch Aktivierung/Deaktivierung oder aufgrund der Auswertung einer logischen Bedingung, werden bei der Inbetriebnahme der jeweiligen Maschine 16 nur alle die Daten an die Maschine 16 übertragen, die für die jeweilige funktionelle Ausprägung der Maschine 16 notwendig sind.

Eine bedingte Auswahl notwendiger Schritte 30 wird über Eigenschaften gesteuert. Alle Schritte 30 besitzen mehrere gleiche Eigenschaften. Als Eigenschaft kommt in Betracht, dass die Schritte einer Gruppe entweder durch einfache Auswahl (m aus n - Check-Box) oder Alternativauswahl (1 aus n - Radio-Button) aktiviert oder deaktiviert werden können. Die Aktivierung oder Deaktivierung jedes einzelnen Schritts 28 ist abhängig von den zulässigen Konfigurationsmöglichkeiten innerhalb der Maschine/Maschinenserie und kann entweder bereits zum Zeitpunkt der Projektierung erfolgen oder später direkt an der Maschine durch den Bediener oder durch das Einlesen einer Datei, die u. a. den Zustand dieser Eigenschaft für einzelne oder alle Schritte beinhaltet. Um fehlerhafte oder irrtümliche Aktivierungen oder Deaktivierungen durch den Bediener an der Maschine gezielt zu verhindern oder zu vermeiden, kann bei der Projektierung durch eine Sperre verhindert werden, dass der Bediener den Zustand der Aktivierung ändern kann.

Wenn ein übergeordneter Schritt 30 deaktiviert ist und demzufolge nicht zur Ausführung gelangt, werden alle hierarchisch darunter liegenden Schritte 30 auch nicht ausgeführt, unabhängig davon, ob sie aktiviert oder deaktiviert sind.

FIG 3 zeigt dazu einen im Vergleich zu der Darstellung in FIG 2 umfangreicheren Schrittbaum 28 mit einigen bereits im Zusammenhang mit der Beschreibung von FIG 2 erläuterten Elementen. Die Bedeutung der in der Darstellung verwendeten Symbole ist wie folgt:
(offenes Schloss) = Schrittaktivierung durch Bediener an der Maschine änderbar
(geschlossenes Schloss) = Schrittaktivierung durch Bediener an der Maschine änderbar
(markiertes Auswahlfeld; farbig hinterlegt) = Schritt ist aktiviert und kann ausgeführt werden
(markiertes Auswahlfeld ohne farbige Hinterlegung) = Schritt ist aktiviert und wird nicht ausgeführt
(nicht markiertes Auswahlfeld) = Schritt ist nicht aktiviert und wird nicht ausgeführt

Sind bei einem Schritt 30 alle hierarchisch übergeordneten Schritte 30 aktiviert und der Schritt 30 selbst ist aktiviert und die optionale logische Bedingung fordert oder erlaubt die Schrittabarbeitung, so sind alle Voraussetzungen für die Ausführung des Schritts 30 erfüllt. Bei der Ausführung des Schritts 30 können ein oder mehrere, mit dem Schritt 30 verknüpfte Skripte 32 in einer projektierten Reihenfolge sequentiell abgearbeitet werden. Ein Schritt 30 muss allerdings nicht notwendigerweise verknüpfte Skripte 32 besitzen, sondern kann auch nur zur Gruppierung und zur gesteuerten Verzweigung im Schrittbaum 28 dienen. Die Schritte 30 bilden, zusammen mit evtl. Unterschritten, ein Objekt, also z.B. eine Modul oder eine Funktionsgruppe, einer modularen Maschine 16 ab. Insoweit ergibt sich eine Entsprechung von abgebildetem Objekt und den jeweils zugehörigen Schritten 30.

Die Skripte 32 dienen dem Zweck, alle Daten, d.h. alle Inbetriebnahmedaten, bereitzustellen, die dem jeweiligen Schritt 30 inhaltlich zugewiesen sind. Die Skripte 32 schaffen somit die Voraussetzung, dass diese Daten in die Steuerung der Maschine 16 geladen werden können. In den Skripten 32 können Datensätze mit unterschiedlichem Charakter sowie Anweisungen zu deren Handling projektiert werden (Dateien, mit denen eine Installation ausgeführt wird, Teileprogramme, die zur Fertigung von Teilen an der Maschine notwendig sind, Bausteine und Dateien, die ein modular gestaltetes Logikprogramm ergeben, Datensätze für numerische Maschinenachsen, Datensätze für Antriebe der Maschine, Alarm- und Diagnosetexte, Bilder zur Bedienerunterstützung, Definitionsdateien mit Anwenderdaten usw.)

Auf Dateien und Datensätze, die im Produktdatenmanagementsystem 10 unter anderen Ordnungskriterien und zum Teil auch versioniert gespeichert sind, kann in den Skripten 32 referenziert werden, wie dies in FIG 2 durch die Pfeile zu einzelnen Daten 26 dargestellt ist. Dadurch besteht die Möglichkeit, nach Abschluss der Projektierung zu einem definierten Zeitpunkt die Referenzen aufzulösen und alle aktuellen Daten, d.h. alle aktuellen Inbetriebnahmedaten, und Anweisungen einschließlich des Schrittbaums 28 in ein auf einer in Betrieb zu nehmenden Maschine 16 ausführbares Softwarepaket 14 (FIG 1) einzubetten. Das Softwarepaket 14 wird dazu um Programmcodeanweisungen ergänzt, die eine Abarbeitung des Schrittbaums 28 erlauben, also Programmcodeanweisungen, mit denen eine Erkennung der Struktur des Schrittbaums 28 und eine Interpretation der einzelnen Schritten 30 zugeordneten Eigenschaften möglich ist.

Insgesamt wird damit die Abarbeitung, insbesondere eine interpretative Abarbeitung, des Schrittbaums 28 gemäß dessen Struktur und die Ausführung einzelner Schritte entsprechend der jeweiligen Eigenschaften möglich. Interpretativ bedeutet dabei, dass jeweils ein Teil des Schrittbaums 28 eingelesen und wie bei einer Programmiersprache der entsprechende Teil interpretiert wird, also übersetzt wird, und entsprechend der Übersetzung z.B. der Aufruf eines nächsten Schritts 30 des Schrittbaums 28 oder die Auswertung einer Bedingung für die Ausführung eines Schritts 30 erfolgt.

Wenn das Softwarepaket 14 nicht selbst solche Programmcodeanweisungen enthält, kann vorgesehen sein, dass die Maschine 16 bereits eine Funktionalität mit entsprechenden Programmcodeanweisungen aufweist, die eine Interpretation und dementsprechende Abarbeitung eines in dem Softwarepaket 14 enthaltenen Schrittbaums 28 erlauben. Wenn die Programmcodeanweisungen zur Interpretation des Schrittbaums 28 direkt in das Softwarepaket 14 eingebettet werden, sind diese auf das jeweilige Zielsystem abgestimmt, also z.B. derart, dass ein Prozessor einer von der Maschine umfassten Steuerung die Programmcodeanweisungen ausführen kann.

Das ausführbare Softwarepaket 14 enthält also den Schrittbaum 28, ggf. in einer für Interpretationszwecke besonders geeigneten Form, evtl. ein ausführbares Programm, das den Schrittbaum 28 insbesondere interpretativ abarbeitet, und die Inbetriebnahmedaten einer bestimmten Maschine 16 oder Maschinenserie. Des Weiteren umfasst das Softwarepaket 14 Informationen über den Zustand der Schritte 30, z.B. ob ein Schritt 30 aktiviert oder deaktiviert ist, etc.. Diese Information kann von dem Softwarepakt 14 als separate Datei oder separater Datensatz umfasst sein. Die Information kann auch bereits direkt in dem Schrittbaum 28 oder dessen Entsprechung im Softwarepaket 14 enthalten sein, indem jeder Schritt 30 durch ein eigenständiges Softwareobjekt mit individuellen Attributen repräsentiert ist, wobei die Attribute des jeweiligen Softwareobjekts die für den jeweiligen Schritt definierten Eigenschaften, also z.B. ob der Schritt aktiviert ist, abbilden.

Bereits bei der Projektierung kann vorgesehen werden, dass der Schrittbaum 28 nicht nur automatisiert z.B. auf der Steuerung der jeweiligen Maschine 16 oder Maschinenserie abgearbeitet wird, sondern dass vor dem Zeitpunkt der Abarbeitung des Schrittbaums 28 die Aktivierung oder Deaktivierung von Schritten auch manuell durch einen qualifizierten Bediener an der Maschine 16 vorgenommen bzw. geändert werden kann. Derartige Änderungsinformationen können auch in einer insbesondere von dem Softwarepaket 14 umfassten Datei hinterlegt werden, die vor der Interpretation und Abarbeitung des Schrittbaums 28 ausgewählt und eingelesen wird.

Ein einmal erstellter Schrittbaum 28 kann bei Erweiterung oder Veränderung des Maschinenspektrums durch Hinzufügen oder Weglassen von Schritten 30, durch Änderungen von Schritteigenschaften oder dem Referenzieren anderer Daten vergleichsweise schnell und einfach angepasst werden.

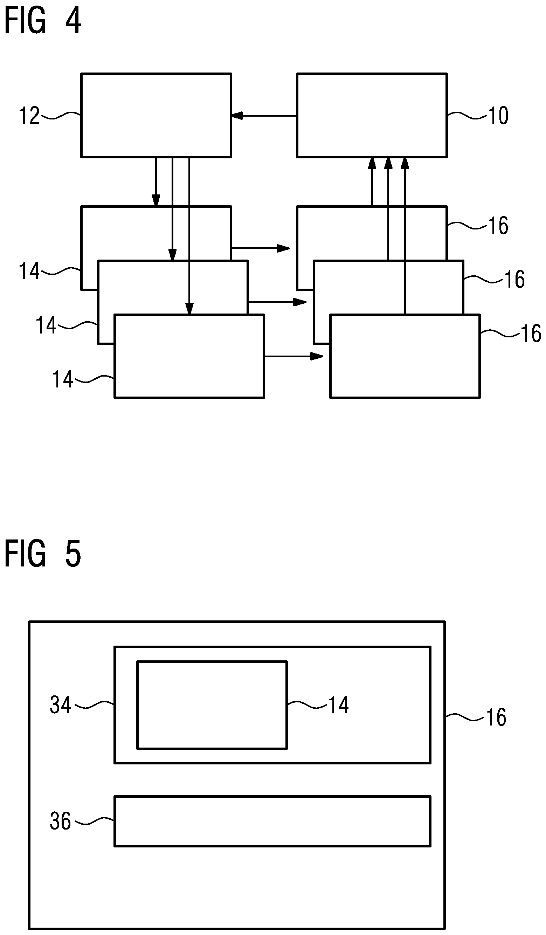

Das mit dem Projektierungssystem 12 erstellte ausführbare Softwarepaket 14 wird bei dem Ausführungsbeispiel in FIG 1 auf einer Maschine oder einer oder mehreren Maschinen einer Maschinenserie ausgeführt. Bei dem Ausführungsbeispiel in FIG 4 werden bereits bei der Projektierung evtl. Besonderheiten einzelner Maschinen 16 berücksichtigt und es wird für jede Maschine 16 ein speziell für diese bestimmtes Softwarepaket 14 generiert. Die konkreten Arbeitsschritte bei der Abarbeitung des Softwarepakets 14 können durch einen jeweiligen Rechner (z.B. der Steuerungseinrichtung der Maschine 16) in einem Logbuch dokumentiert werden.

Wenn bei einer Inbetriebnahme mehrerer Maschinen 16 Erkenntnisse dahingehend gesammelt werden, dass eine Korrektur der Inbetriebnahmedaten sich als vorteilhaft oder notwendig erweist, können die Inbetriebnahmedaten mit dem Projektierungssystem 12 unmittelbar in dem Softwarepaket 14 oder auch, speziell wenn das Softwarepaket 14 Daten im Produktdatenmanagementsystem 10 referenziert, im Produktdatenmanagementsystem 10 geändert werden.

Durch den hier beschriebenen Ansatz ist gewährleistet, dass einzelne Daten 26, Datengruppen 20-24, Datensätze 18 oder Dateien nur einmal abgelegt werden müssen, obwohl sie von mehreren Schritten 30 oder davon umfassten Skripten 32 referenziert werden können. Die Ablage kann dabei in einer beliebigen Struktur erfolgen, die sich an Ordnungskriterien orientiert, die keine Entsprechung in einer Gliederung z.B. entsprechend der Konfiguration der Maschine oder der Struktur des Schrittbaums 28 haben muss.

FIG 5 zeigt abschließend schematisch stark vereinfacht eine Maschine 16 mit einem in einen Speicher 34 der Maschine 16 geladenen Softwarepaket 14 als Ergebnis der oben beschriebenen Projektierung. Das Softwarepaket 14 wird auf der Maschine 16 durch eine von dieser umfassten Verarbeitungseinheit, z.B. nach Art eines Mikroprozessors 36, in an sich bekannter Art und Weise ausgeführt. Weitere Details der Maschine 16, bei der es sich z.B. um eine Werkzeugmaschine handelt, also etwa Antriebe und dergleichen, sind nicht dargestellt und sind von der jeweiligen Maschine 16 und deren Konfiguration abhängig.

Einzelne Aspekte des eben Gesagten lassen sich kurz wie folgt zusammenfassen: Angegeben wird ein Verfahren zur Inbetriebnahme von Maschinen 16 oder einer Maschinenserie aus der Automatisierungstechnik, wobei in einem Projektierungssystem 12 anhand eines Schritte 30 aufweisenden Schrittbaums 28 ein auf den Maschinen 16 ausführbares Softwarepaket 14 erstellt wird, das die Inbetriebnahmedaten einer bestimmten Maschine 16 oder der Maschinenserie enthält.

## Patentansprüche

1. Verfahren zur Inbetriebnahme, Konfiguration oder Parametrierung einer Maschine (16) oder Maschinen (16) einer Maschinenserie,
(a) wobei mittels eines Projektierungssystems (12) ein ausführbares Softwarepaket (14) erstellt wird, wobei das Softwarepaket (14) Inbetriebnahmedaten einer bestimmten Maschine (16) oder der Maschinen (16) der Maschinenserie enthält;
(b) wobei das ausführbare Softwarepaket (14) mittels des Projektierungssystems (12) automatisch anhand eines Schrittbaums (28) generiert wird und den Schrittbaum (28) umfasst,
wobei der Schrittbaum (28) in Form eines Graphen mit Kanten und Knoten strukturiert ist,
wobei die Kanten des Schrittbaums (28) zugelassene Übergänge zwischen jeweils zwei Knoten des Schrittbaums (28) beschreiben,
wobei die Knoten des Schrittbaums Inbetriebnahmeschritte (30) bilden,
wobei der Schrittbaum (28) in hierarchisch strukturierter Anordnung diejenigen Daten und/oder Informationen umfasst, die für die Inbetriebnahme einer Maschine (16) oder einer Mehrzahl von Maschinen benötiqt werden; und
(c) wobei das Softwarepaket (14) mittels einer von der Maschine (16) umfassten Steuerungseinrichtung oder mittels einer mit der Maschine (16) kommunikativ verbundenen Einheit, insbesondere einem Programmiergerät oder einem lokalen oder entfernten Server, ausgeführt wird, und dabei die Inbetriebnahmeschritte entsprechend einer mittels des Schrittbaums (28) festgelegten Reihenfolge ausgeführt werden.

2. Verfahren nach Anspruch 1, wobei zumindest einzelne Knoten einen ausführbaren Inbetriebnahmeschritt (30) darstellen und wobei die Inbetriebnahmeschritte (30) aktivierbar oder deaktivierbar sind und wobei nur aktivierte Schritte (30) abgearbeitet werden.

3. Verfahren nach Anspruch 2, wobei die Ausführung eines Inbetriebnahmeschritts (30) vom Ergebniswert einer logischen Bedingung, insbesondere von einer mit einer zum jeweiligen Knoten führenden Kante assoziierten logischen Bedingung, abhängt.

4. Verfahren nach einem der vorhergehenden Ansprüche, wobei mindestens ein Inbetriebnahmeschritt (30) mit mindestens einem Skript (32) verknüpft ist und wobei das Skript (32) mindestens eine Anweisung und/oder Daten enthält.

5. Verfahren nach Anspruch 4, wobei das Skript (32) mindestens eine Referenz auf in einem externen System, insbesondere einem Produktdatenmanagementsystem (10), gespeicherte Inbetriebnahmedaten der Maschine (16) oder Maschinenserie enthält.

6. Verfahren nach einem der vorhergehenden Ansprüche,
**dadurch gekennzeichnet, dass** die Maschinen (16) als modulare Werkzeugmaschinen ausgebildet sind.

7. Computerprogramm mit durch einen Computer ausführbaren Programmcodeanweisungen zur Implementierung des Verfahrens nach einem der Ansprüche 1 bis 6, wenn das Computerprogramm auf einem Computer ausgeführt wird.

8. Speichermedium mit einem durch einen Computer ausführbaren Computerprogramm gemäß Anspruch 7.

9. Projektierungssystem mit Mitteln zur Erstellung eines auf einer Maschine (16) ausführbaren Softwarepakets (14) und mit einem Computerprogramm nach Anspruch 7 oder einem Speichermedium nach Anspruch 8.

10. Maschine (16), insbesondere Werkzeugmaschine, mit einem Computerprogramm nach Anspruch 7 oder einem Speichermedium nach Anspruch 8.

## Claims

1. Method for starting up, configuring or parameterizing a machine (16) or machines (16) in a machine series,
(a) wherein a planning system (12) is used to create an executable software package (14), wherein the software package (14) contains start-up data for a particular machine (16) or for the machines (16) in the machine series;
(b) wherein the executable software package (14) is automatically generated by means of the planning system (12) using a step tree (28) and comprises the step tree (28),
wherein the step tree (28) is structured in the form of a graph with edges and nodes,
wherein the edges of the step tree (28) describe permitted transitions between two nodes of the step tree (28) in each case,
wherein the nodes of the step tree form start-up steps (30), wherein the step tree (28) comprises, in a hierarchically structured arrangement, those items of data and/or information which are needed to start up a machine (16) or a plurality of machines (16); and
(c) wherein the software package (14) is executed by means of a control device included in the machine (16) or by means of a unit communicatively connected to the machine (16), in particular a programming device or a local or remote server, and the start-up steps are carried out in the process according to a sequence defined by means of the step tree (28) .

2. Method according to Claim 1, wherein at least individual nodes represent an executable start-up step (30), and wherein the start-up steps (30) can be activated or deactivated, and wherein only activated steps (30) are executed.

3. Method according to Claim 2, wherein the execution of a start-up step (30) depends on the result value of a logical condition, in particular on a logical condition associated with an edge leading to the respective node.

4. Method according to one of the preceding claims, wherein at least one start-up step (30) is linked to at least one script (32), and wherein the script (32) contains at least one instruction and/or data.

5. Method according to Claim 4, wherein the script (32) contains at least one reference to start-up data for the machine (16) or machine series which are stored in an external system, in particular a product data management system (10).

6. Method according to one of the preceding claims, **characterized in that** the machines (16) are in the form of modular machine tools.

7. Computer program having program code instructions which can be executed by a computer and are intended to implement the method according to one of Claims 1 to 6 if the computer program is executed on a computer.

8. Storage medium having a computer program according to Claim 7 which can be executed by a computer.

9. Planning system having means for creating a software package (14) which can be executed on a machine (16) and having a computer program according to Claim 7 or a storage medium according to Claim 8.

10. Machine (16), in particular a machine tool, having a computer program according to Claim 7 or a storage medium according to Claim 8.

## Revendications

1. Procédé de mise en service, de configuration ou de paramétrage d'une machine (16) ou de machines (16) d'une série de machines,
(a) dans lequel au moyen d'un système (12) de planification, on établit un progiciel (14) réalisable, le progiciel (14) contenant des données de mise en service d'une machine (16) déterminée ou des machines (16) de la série de machines;
(b) dans lequel le progiciel (14) réalisable est produit automatiquement à l'aide d'un arbre (28) de stade au moyen du système (12) de planification et comprend l'arbre (28) de stade,
dans lequel l'arbre (28) de stade est structuré sous la forme d'un graphique ayant des arêtes et des nœuds,
dans lequel les arêtes de l'arbre (28) de stade décrivent des transitions autorisées entre respectivement deux nœuds de l'arbre (28) de stade,
dans lequel les nœuds de l'arbre de stade forment des stades (30) de mise en service,
dans lequel l'arbre (28) de stade comprend en un agencement structuré hiérarchiquement les données et/ou les informations qui sont nécessaires pour la mise en service d'une machine (16) ou d'une pluralité de machines et
(c) dans lequel le progiciel (14) est réalisé au moyen d'un dispositif de commande compris dans la machine (16) ou au moyen d'une unité communiquant avec la machine (16), notamment d'un appareil de programmation ou d'un serveur local ou à distance,
et ainsi les stades de mise en service sont réalisés conformément à une suite fixée au moyen de l'arbre (28) de stade.

2. Procédé suivant la revendication 1, dans lequel au moins des nœuds individuels représentent un stade (30) réalisable de mise en service et dans lequel les stades (30) de mise en service peuvent être activés ou désactivés, dans lequel seuls des stades (30) activés se déroulent.

3. Procédé suivant la revendication 2, dans lequel la réalisation d'un stade (30) de mise en service dépend de la valeur du résultat d'une condition logique, notamment d'une condition logique associée à une arête menant au nœud respectif.

4. Procédé suivant l'une des revendications précédentes, dans lequel au moins un stade (30) de mise en service est combiné à au moins un écrit (32) et dans lequel l'écrit (32) contient au moins une instruction et/ou des données.

5. Procédé suivant la revendication 4, dans lequel l'écrit (32) contient au moins une référence à un système extérieur notamment à un système (10) de gestion de données de produit, à des données de mise en service mises en mémoire de la machine (16) ou de la série de machines.

6. Procédé suivant l'une des revendications précédentes, **caractérisé en ce que** les machines (16) sont constituées sous la forme de machines-outils modulaires.

7. Programme d'ordinateur ayant des instructions de code de programme réalisable par un ordinateur pour la mise en œuvre du procédé suivant l'une des revendications 1 à 6 lorsque le programme d'ordinateur est réalisé sur un ordinateur.

8. Support de mémoire ayant un programme d'ordinateur réalisable par un ordinateur suivant la revendication 7.

9. Système de planification ayant des moyens d'établissement d'un progiciel (14) réalisable sur une machine (16) et ayant un programme d'ordinateur suivant la revendication 7 ou un support de mémoire suivant la revendication 8.

10. Machine (16) notamment machine-outil ayant un programme d'ordinateur suivant la revendication 7 ou un support de mémoire suivant la revendication 8.
